# EUROPEAN PATENT APPLICATION

(11) **EP 2 966 760 A1**
(43) Date of publication of application: **13.01.2016**
(21) Application number: 13877261.1
(22) Date of filing: 06.03.2013
(51) Int. Cl.: H02K 9/06, H02K 5/20

(54) **ROTATING ELECTRICAL MACHINE**

(71) Applicant: Mitsubishi Electric Corporation, Tokyo 100-8310 (JP)
(72) Inventor: AKIYOSHI, Masao, Tokyo 100-8310 (JP); SHIRAI, Keisuke, Tokyo 100-8310 (JP)
(74) Representative: Hoffmann Eitle
(86) International application number: PCT/JP2013/056116
(87) International publication number: WO 2014/136217

(57) **Abstract**

In an alternator for a vehicle according to the present invention, each of rear-side ribs defining each of rear-side exhaust holes includes a projecting portion that has a three-sided sectional shape obtained by cutting along a vertical direction relative to a center axis line of a shaft at least in a portion away from respective end portions of stator coils, and has an apex oriented toward a cooling fan. The apex is oriented in a direction opposite to a rotating direction of the cooling fan. Therefore, the amount of air generated by the cooling fan is increased to improve cooling performance for a stator.

## Description

### Technical Field

The present invention relates to a rotating electrical machine that allows cooling air, which is generated by a cooling fan rotating together with rotation of a rotor, to be exhausted externally through exhaust holes formed in a casing.

### Background Art

Hitherto, there is known an alternator including a plurality of convex rectifying guides arranged in a circumferential direction on an inner surface of an extended wall portion, which is arranged closer to a plurality of exhaust holes than to a shroud, which is arranged on a casing side so that cooling air flowing from a cooling fan through stator coils into a ventilation path is rectified (see, for example, Patent Literature 1).

In the alternator, interference caused by a disturbance in the cooling air in the vicinity of the plurality of exhaust holes of the casing, specifically, in the vicinity of the extended wall portion is significantly suppressed through arrangement of the rectifying guides, resulting in significantly reducing wind noise.

Further, in the alternator, the effect of enabling the cooling air to efficiently and smoothly pass between surfaces of the stator coils and the inner surface of the extended wall portion is obtained, while the plurality of rectifying guides also serve as cooling fins, thereby being capable of improving the effect of cooling the casing.

### Citation List

### Patent Literature

[PTL 1] JP 09-172752 A

### Summary of Invention

### Technical Problem

In the related-art alternator for a vehicle, the rectifying guides are arranged closer to an outlet-side end portion of the cooling fan than to the plurality of exhaust holes of the casing. Therefore, velocity of the cooling air flowing to the rectifying guides is larger than velocity of flow into the plurality of exhaust holes of the casing. Thus, when the cooling air at high velocity impinges on the rectifying guides, there is a problem in that the disturbance in the cooling air, which is caused by the impingement, is increased, resulting in increase in interference noise generated by the increase in disturbance.

Further, a width of a flow path of the cooling air is narrowed due to the presence of the rectifying guides. Subsequently, the flow enlarges in a space between the rectifying guides and the plurality of exhaust holes, and is contracted again through the plurality of exhaust holes of the casing. When the width of the flow path is changed as described above, a contraction loss or an enlargement loss is generated in the flow, to thereby decrease the amount of air from the cooling fan. As a result, there is also a problem in that sufficient cooling performance for a stator or the like may not be obtained.

The present invention has been made to solve the problem described above, and therefore has an object to provide a rotating electrical machine having improved cooling performance for a stator, which increases the amount of air from a cooling fan by reducing a resistance of a plurality of exhaust holes of a casing against cooling air.

### Solution to Problem

According to one embodiment of the present invention, there is provided a rotating electrical machine, including:
a casing including ribs each defining each of a plurality of exhaust holes formed on a circumferential side surface thereof;
a shaft arranged to extend along a center axis line of the casing;
a rotor fixed to the shaft;
a stator arranged in the casing to surround the rotor, including a stator core and stator coils wound around the stator core; and
a cooling fan fixed to at least one axial surface of the rotor, for cooling the stator using cooling air generated through rotation thereof,
the ribs each having a projecting portion having a polygonal sectional shape cut along a vertical direction relative to the center axis line at least in a portion away from respective end portions of the stator coils, the projecting portion having an apex oriented toward the cooling fan, which is oriented in a direction opposite to a rotating direction of the cooling fan.

### Advantageous Effects of Invention

According to the rotating electrical machine of the one embodiment of the present invention, the apex of each of the projecting portions of the ribs, which is oriented toward the cooling fan, is oriented in the direction opposite to the rotating direction of the cooling fan. Thus, the resistance of the exhaust holes against the cooling air is reduced to increase the amount of air from the cooling fan to result in improved cooling performance for the stator.

### Brief Description of Drawings

FIG. 1 is a longitudinal sectional view illustrating an alternator for a vehicle according to a first embodiment of the present invention.
FIG. 2 is a sectional view of a rectifier illustrated in FIG. 1 when viewed in an axial direction.
FIG. 3 is a sectional view of a rear-side cooling fan illustrated in FIG. 1 cut along a vertical direction relative to a center axis line of a shaft.
FIG. 4 is a perspective view of a rear bracket illustrated in FIG. 1 when viewed from an inner side.
FIG. 5 is a perspective view of a front bracket illustrated in FIG. 1 when viewed from an inner side.
FIG. 6 is a sectional view of the projecting portions of the rear-side ribs illustrated in FIG. 1 cut along a vertical direction relative to a center axis line of a shaft.
FIG. 7 is a sectional view showing a modification of the projecting portions illustrated in FIG. 6.
FIG. 8 is a sectional view showing another modification of the projecting portions illustrated in FIG. 6.
FIG. 9 is a sectional view when projecting portions of rear-side ribs of the alternator for a vehicle according to a second embodiment of the present invention are cut along the vertical direction relative to the center axis line of the shaft.
FIG. 10 is a sectional view showing a modification of the projecting portions illustrated in FIG. 9.
FIG. 11 is a sectional view showing another modification of the projecting portions illustrated in FIG. 9.
FIG. 12 is a sectional view when projecting portions of rear-side ribs of the alternator for a vehicle according to a third embodiment of the present invention are cut along the vertical direction relative to the center axis line of the shaft.
FIG. 13 is a sectional view showing a modification of the projecting portions illustrated in FIG. 12.
FIG. 14 is a sectional view showing another modification of the projecting portions illustrated in FIG. 12.

### Description of Embodiments

Referring to the accompanying drawings, embodiments of the present invention are described below. In the drawings, the same or corresponding components and parts are denoted by the same reference symbols.

### First Embodiment

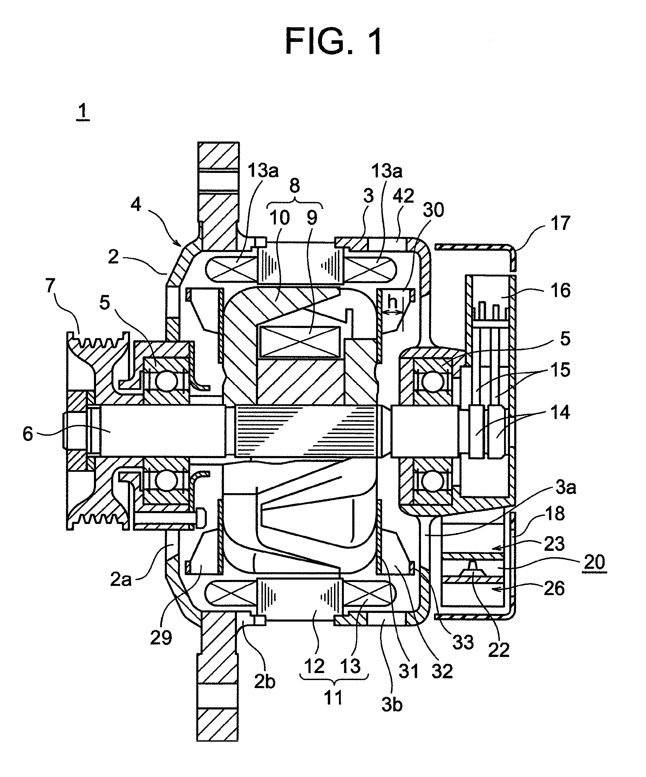

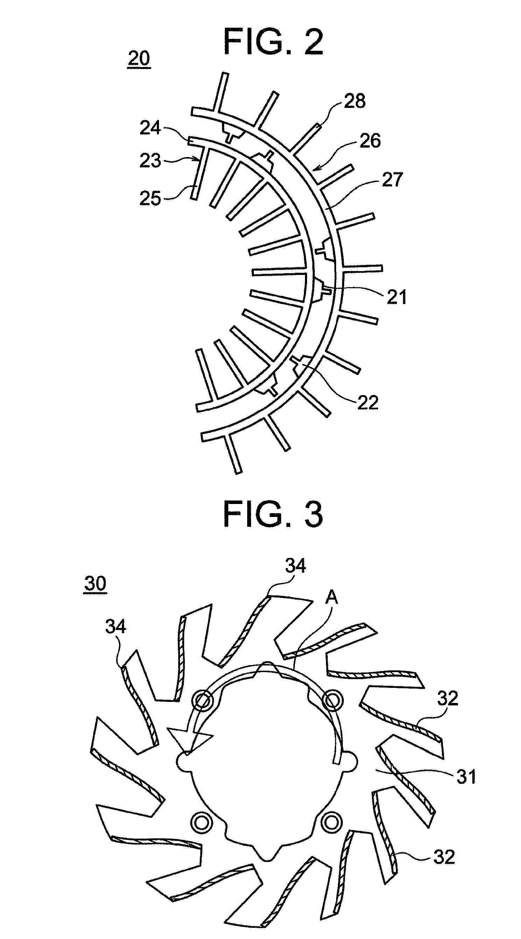

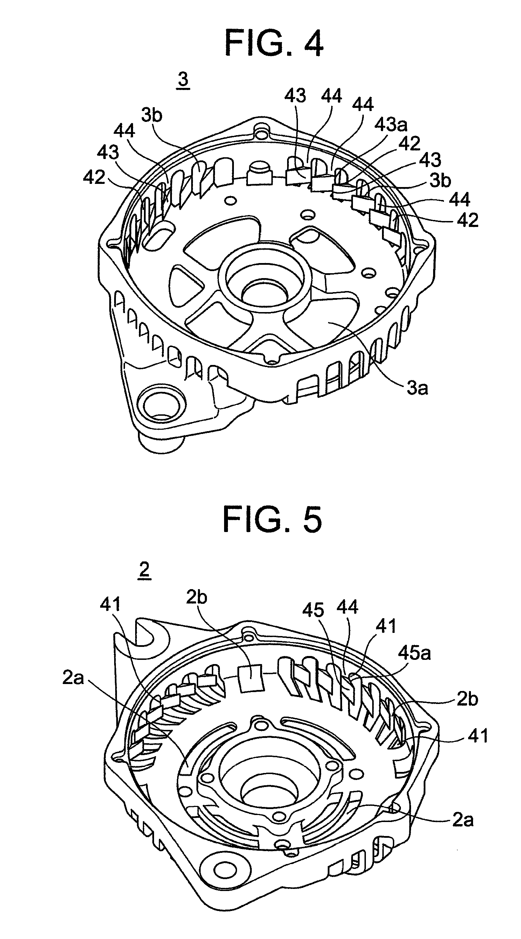

FIG. 1 is a longitudinal sectional view illustrating an alternator 1 for a vehicle according to a first embodiment of the present invention, FIG. 2 is a sectional view of a rectifier 20 illustrated in FIG. 1 when viewed in an axial direction, FIG. 3 is a sectional view of a rear-side cooling fan 30 illustrated in FIG. 1 cut along a vertical direction relative to a center axis line of a shaft 6, FIG. 4 is a perspective view of a rear bracket 3 illustrated in FIG. 1 when viewed from an inner side, and FIG. 5 is a perspective view of a front bracket 2 illustrated in FIG. 1 when viewed from an inner side.

In FIG. 1, the alternator 1 for a vehicle, being a rotating electrical machine, includes a casing 4 including the front bracket 2 and the rear bracket 3 each made of aluminum and having an approximately bowl-like shape, the shaft 6 rotatably supported by the casing 4 through bearings 5, a pulley 7 firmly fixed to an end portion of the shaft 6 that extends to a front side of the casing 4, a rotor 8 fixed to the shaft 6 to be arranged inside the casing 4, and a stator 11 fixed to the casing 4 so as to surround the rotor 8.

The alternator 1 for a vehicle further includes a pair of slip rings 14 fixed to another extended end from the rear bracket 3, for supplying a current to the rotor 8, a pair of brushes 15 that slide against surfaces of the respective slip rings 14, a brush holder 16 arranged outside of the rear bracket 3 in an axial direction thereof, for housing the brushes 15 therein, the rectifier 20 electrically connected to the stator 11 and arranged outside of the rear bracket 3 in the axial direction, for rectifying an AC generated in the stator 11 into a DC, a voltage regulator (not shown) arranged outside of the rear bracket 3 in the axial direction, for regulating a magnitude of an AC voltage generated in the stator 11, and a cover 17 mounted to the rear bracket 3, for covering the brush holder 16, the rectifier 20, and the voltage regulator.

The above-mentioned front bracket 2 includes a plurality of front-side intake holes 2a formed in an inner circumferential portion thereof and a plurality of front-side exhaust holes 2b formed through a circumferential side surface thereof. The front-side exhaust holes 2b are respectively defined by a plurality of ribs 41 arranged at predetermined intervals.

The above-mentioned rear bracket 3 includes a plurality of rear-side intake holes 3a formed in an inner circumferential portion thereof and a plurality of rear-side exhaust holes 3b formed in an outer circumferential portion thereof. The rear-side exhaust holes 3b are respectively defined by a plurality of rear-side ribs 42 arranged at predetermined intervals on a rear side.

Further, the above-mentioned cover 17 includes a plurality of intake holes 18 formed at positions opposed to the rectifier 20 and the voltage regulator (not shown).

The above-mentioned rotor 8 includes field coils 9, through which an excitation current flows to generate magnetic flux, and a pole core 10 fixed to the shaft 6 to cover the field coils 9, for forming, for example, twelve magnetic poles by the magnetic flux. Onto both axial side surfaces of the pole core 10, cooling fans 29 and 30 are firmly fixed by welding or the like.

The above-mentioned stator 11 includes a stator core 12 arranged so as to surround the pole core 10 and stator coils 13 wound around the stator core 12. The stator core 12 is interposed between the front bracket 2 and the rear bracket 3 on both axial sides. The stator core 12 is manufactured to have an annular shape by, for example, laminating magnetic steel plates and includes thirty-six slots formed to be arranged at equiangular pitches so as to be open to an inner circumferential side. In addition, an even gap is ensured between the stator core 12 and an outer circumferential surface of the pole core 10 of the rotor 8.

The above-mentioned rectifier 20 includes, as illustrated in FIG. 2, a first heat sink 23, positive-electrode-side diodes 21 arranged on an outer circumferential surface of the first heat sink 23, a second heat sink 26 arranged coaxially with the first heat sink 23 on a radially outer side of the first heat sink 23, and negative-electrode-side diodes 22 arranged on an inner circumferential surface of the second heat sink 26.

The first heat sink 23 includes a first heat sink base 24, which is manufactured by using a metal material having good heat conductivity such as aluminum, has a predetermined length in the axial direction and a predetermined thickness, and is formed to have a cylindrical shape with an arc-like cross section perpendicularly to the axial direction, and a plurality of first heat-radiating fins 25 arranged at equiangular pitches in the circumferential direction to rise radially from an inner circumferential surface of the first heat sink base 24 so as to extend in the axial direction. The positive-electrode-side diodes 21 are firmly fixed onto an outer circumferential surface of the first heat sink base 24 at predetermined intervals in the circumferential direction by, for example, a solder joint.

The second heat sink 26 includes a second heat sink base 27, which is manufactured by using a metal material having good heat conductivity such as aluminum, has a predetermined length in the axial direction and a predetermined thickness, and is formed to have a cylindrical shape with an arc-like cross section perpendicularly to the axial direction, and a plurality of second heat-radiating fins 28 arranged at equiangular pitches in the circumferential direction to rise radially from an outer circumferential surface of the second heat sink base 27 so as to extend in the axial direction. The negative-electrode-side diodes 22 are firmly fixed, onto an inner circumferential surface of the second heat sink base 27, at predetermined intervals in the circumferential direction by, for example, a solder joint.

Together with the brush holder 16, the first heat sink base 24 surrounds the slip rings 14. At the same time, the above-mentioned first heat sink 23 is arranged coaxially with the shaft 6 on an axially outer side of the rear bracket 3. Further, the above-mentioned second heat sink 26 is arranged on a radially outer side of the first heat sink 23 so as to be coaxial with the shaft 6 on the axially outer side of the rear bracket 3. The positive-electrode-side diodes 21 and the negative-electrode-side diodes 22 are connected so as to form a diode bridge with three diode pairs formed by connecting the positive-electrode-side diodes 21 and the negative-electrode-side diodes 22 in series.

The above-mentioned cooling fans 29 and 30 each are centrifugal fans and include mounting bases 31 each having a ring flat-plate shape, which are to be firmly fixed to both axial end surfaces of the pole core 10, a plurality of fan blades 32 rising from circumferential edge portions of the respective mounting bases 31 at a right angle to a side opposite to the pole core 10, and fan plates 33 each having a flat plate ring-like shape and being mounted to axial end surfaces of the fan blades 32 arranged along the circumferential direction, as illustrated in FIG. 3.

Each of the fan blades 32 is formed in the arc-like shape inverted in the middle to have an S-like sectional shape, as illustrated in FIG. 3. Further, a height h of each of the fan blades 32 in the axial direction becomes gradually larger toward the radially outer side, as illustrated in FIG. 1.

Next, an operation of the alternator 1 for a vehicle is described. The alternator 1 for a vehicle operates as a three-phase alternator having twelve poles and thirty-six slots, but the number of poles and the number of slots are not limited thereto.

In the alternator 1 for a vehicle, the current is supplied from a battery (not shown) through the brushes 15 and the slip rings 14 to the field coils 9 of the rotor 8 to generate the magnetic flux. By the magnetic flux, N-poles and S-poles are alternately formed on the outer circumferential surface of the pole core 10 in the circumferential direction. On the other hand, a rotation torque of an engine is transmitted from an output shaft of the engine through a belt and the pulley 7 to the shaft 6 to rotate the rotor 8. Then, a rotating field is applied to the stator coils 13 of the stator 11 to generate an electromotive force in the stator coils 13. The AC generated by the electromotive force is rectified by the rectifier 20 to charge the battery or to be supplied to an electrical load.

The cooling fans 29 and 30 rotate in conjunction with the rotation of the rotor 8.

On a front side, cooling air is sucked inside the front bracket 2 through the front-side intake holes 2a to reach the vicinity of the rotor 8 along the axial direction. Then, the cooling air is bent in a centrifugal direction by the front-side cooling fan 29, thereby being exhausted through the front-side exhaust holes 2b.

On a rear side, the cooling air is sucked inside the cover 17 through the intake holes 18 to reach the rear bracket 3 by passing between the first heat-radiating fins 25 and the second heat-radiating fins 28, and is sucked inside the rear bracket 3 through the rear-side intake holes 3a to reach the vicinity of the rotor 8 in the axial direction. Then, the cooling air is bent in the centrifugal direction by the cooling fan 30, thereby being exhausted through the rear-side exhaust holes 3b.

A part of heat generated in the stator 11 is radiated from end portions 13a into the cooling air that is bent radially outward by the cooling fans 29 and 30 to be exhausted through each of the exhaust holes 2b on the front side and each of the exhaust holes 3b on the rear side.

Further, a part of the heat is conducted to the front bracket 2 and the rear bracket 3 and is radiated into the cooling air through the plurality of front-side ribs 41 and the plurality of rear-side ribs 42 to cool the stator 11.

Further, heat generated in the positive-electrode-side diodes 21 and the negative-electrode-side diodes 22 is radiated into the cooling air flowing between the first heat-radiating fins 25 and the second heat-radiating fins 28 to cool the rectifier 20.

Next, the rear-side ribs 42 arranged on the circumferential side surface of the rear bracket 3 at predetermined intervals are described in detail.

Each of the rear-side ribs 42 includes a projecting portion 43 formed in a portion away from the end portions 13a of the stator coils 13 and a column portion 44 formed in a portion closer to the end portions 13a.

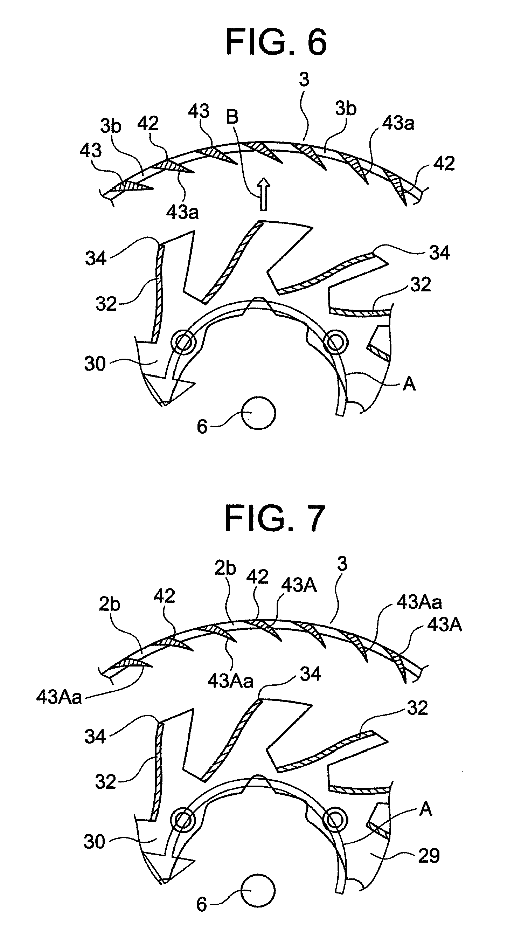

FIG. 6 illustrates a sectional shape when the projecting portions 43 of the rear-side ribs 42 are cut in a vertical direction relative to the center axis line of the shaft 6.

Each of the projecting portions 43 has a scalene triangle sectional shape. A radially inner-side apex 43a of apices of the projecting portion 43 is oriented toward the cooling fan 30 in a direction opposite to a rotating direction A of the cooling fan 30. A line that connects points of the other apices corresponds to an outer circumference of the rear bracket 3. Further, both circumferential wall surfaces of each of the rear-side exhaust holes 3b, which are formed by side surfaces of the projecting portion 43, are opposed in parallel to each other.

Further, each of the column portions 44 has a rectangular cross section, and an inner circumferential surface of the column portion 44 is located on a radially outer side relative to the apex 43a. An outer circumferential surface of the column portion 44 is the same surface as an outer circumferential surface of the projecting portion 43.

In this embodiment, velocity of the cooling air flowing out by the cooling fan 30 from outer circumferential ends 34 of the cooling fan 30 is in a state in which velocity component in the rotating direction A is larger than velocity component in a radial direction B due to the rotation.

Therefore, the cooling air flows from the outer circumferential ends 34 of the cooling fan 30 toward the rear-side exhaust holes 3b while rotating in the rotating direction A, thereby being exhausted externally through the rear-side exhaust holes 3b.

In the case of the related-art rear bracket, each of the ribs that define the exhaust holes has a columnar shape with a rectangular cross section over the entire area in the axial direction. The cooling air flowing out by the cooling fan from the outer circumferential ends of the cooling fan impinges on the columnar ribs when being released through the exhaust holes to the surroundings. As a result, a flow direction is suddenly and forcibly changed into the radial direction.

Such a sudden and forcible change in the flow direction of the cooling air generates a large pressure loss, resulting in a reduced flow rate of the cooling air generated by the cooling fan. Thus, components such as diodes, which are required to be cooled, are not sufficiently cooled.

On the other hand, in the alternator 1 for a vehicle according to this embodiment, the apices 43a of the projecting portions 43 of the rear-side ribs 42 are oriented in the direction opposite to the rotating direction A of the cooling fan 30. Therefore, the cooling air flowing out by the cooling fan 30 from the outer circumferential ends 34 of the cooling fan 30 is guided by the projecting portions 43, thereby being smoothly exhausted outside of the rear bracket 3.

As described above, due to the projecting portions 43, the both wall surfaces of the rear-side exhaust holes 3b are substantially parallel to the flow of the cooling air. The cooling air flows smoothly, and hence the pressure loss due to the impingement on the rear-side ribs 42 can be reduced. As a result, a flow rate of the cooling air generated by the cooling fan 30 is increased to improve cooling performance for components, which are required to cool the diodes 21 and 22 and the like.

Further, the heat conducted from the stator 11 to the rear bracket 3 is radiated into the cooling air through the ribs 42. The apices 43a of the projecting portions 43 of the rear-side ribs 42 project radially inward from the column portions 44. Therefore, an area of the both wall surfaces of the rear-side exhaust holes 3b increases, and a heat-radiating area increases correspondingly. Thus, cooling performance provided by the rear bracket 3 itself is also improved.

Further, with the related-art columnar ribs, the cooling air separates away at a radially inner-side corner of a wall surface of the both wall surfaces of the exhaust holes, on which the cooling air impinges directly, resulting in lowered velocity. Thus, a heat-radiating effect of the wall surface is also lowered.

On the other hand, with the rear-side ribs 42 of this embodiment, the cooling air is smoothly split by the apices 43a of the projecting portions 43 of the rear-side exhaust holes 3b and therefore smoothly flows along the side surfaces of the projecting portions 43. Thus, the heat-radiating performance of the both wall surfaces of the rear-side exhaust holes 3b is improved.

Further, there is a potential difference between the end portions 13a of the stator coils 13 and the rear bracket 3. Therefore, when the end portions 13a and the rear bracket 3 come extremely close to each other, there is a risk that a short-circuit current is generated to cause a failure.

On the other hand, in this embodiment, the column portion 44 of each of the ribs 42, which is located on the side closer to the end portions 13a, has a rectangular cross section, and the inner circumferential surface of the column portion 44 is located on the radially outer side relative to the apex 43a. Therefore, a distance between the end portions 13a and the columnar portions 44 is larger than a distance between the end portions 13a and the projecting portions 43. Hence, the short-circuit current is less liable to be generated between the rear bracket 3 and the end portions 13a.

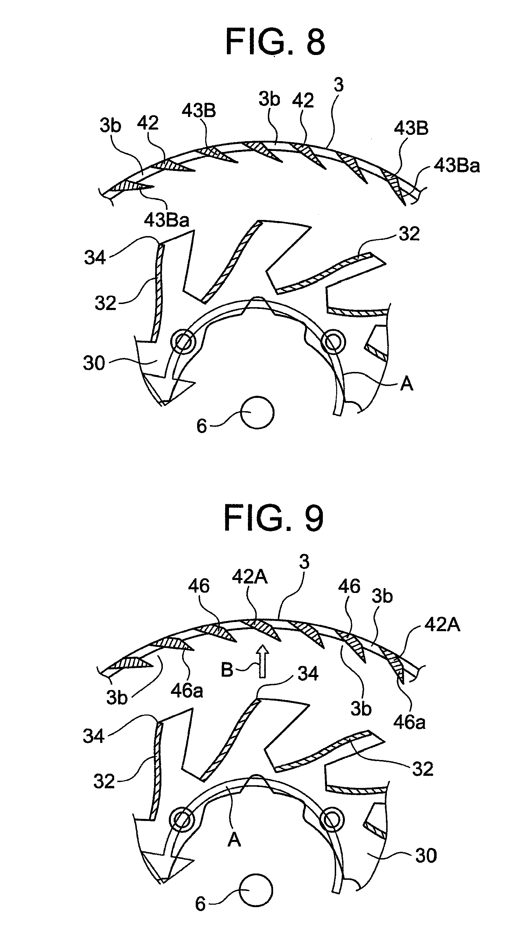

Each of the projecting portions 43 of the rear-side ribs 42 has a linear side surface that faces the exhaust holes 3b. Even in a case where both side surfaces of each of projecting portions 43A and 43B have an arc-like shape and each of apices 43Aa and 43Ba is oriented in the direction opposite to the rotating direction of the cooling fan 30 as illustrated in FIGS. 7 and 8, however, the same effects as those obtained by the rear-side ribs 42 can be obtained.

Further, a distal end of each of the apices of each of the projecting portions 43, 43A, and 43B is sharp, but the same effects can be obtained even when the distal end is rounded for manufacturing convenience.

The front-side ribs 41 also have projecting portions 45 as illustrated in FIG. 5.

Similarly to the projecting portions 43, each of the projecting portions 45 has a scalene triangle sectional shape. A radially inner-side apex 45a of apices of the projecting portion 45 is oriented in a direction opposite to a rotating direction of the front-side cooling fan 29, thereby providing the same effects as those of the rear-side ribs 42.

When the front-side cooling fan 29 has a shape different from that of the rear-side cooling fan 30, the direction of orientation of the apices 45a of the projecting portions 45 is also different.

The direction of orientation is a direction along the radial flow direction of the cooling air generated by the front-side cooling fan 29. The pressure loss of the cooling air is reduced by the front-side exhaust holes 2b.

### Second Embodiment

FIG. 9 is a sectional view when projecting portions 46 of rear-side ribs 42A of the alternator 1 for a vehicle according to a second embodiment of the present invention are cut along the vertical direction relative to the center axis line of the shaft 6.

Each of the projecting portions 43, 43A, and 43B of the rear side ribs 42 of the first embodiment has a three-sided sectional shape, but each of the projecting portions 46 of the rear-side ribs 42A of this embodiment has a trapezoidal sectional shape.

An inner-side apex 46a of apices of each of the projecting portions 46 is oriented in the direction opposite to the rotating direction A of the cooling fan 30. A line that connects points of the other apices corresponds to the outer circumference of the rear bracket 3. Further, both circumferential wall surfaces of each of the rear-side exhaust holes 3b, which are formed by side surfaces of the projecting portion 46, are opposed to each other.

Further, each of the column portions has a rectangular cross section, and the inner circumferential surface of the column portion is located on a radially outer side relative to the apex 46a. The outer circumferential surface of the column portion is the same surface as an outer circumferential surface of the projecting portion 46.

In this embodiment, the radially inner-side apex 46a of the apices of each of the projecting portions 46 is oriented in the direction opposite to the rotating direction A of the cooling fan 30.

The remaining configuration is the same as that of the first embodiment.

According to the alternator 1 for a vehicle of this embodiment, the apex 46a of each of the projecting portions 46, which has the trapezoidal shape, is oriented in the direction opposite to the rotating direction A of the cooling fan 30. The both wall surfaces of each of the rear-side exhaust holes 3b are nearly parallel to the flow of the cooling air due to the projecting portions 46. Therefore, the same effects as those of the first embodiment can be obtained.

Further, each of the projecting portions 43 of the rear-side ribs 42 of the first embodiment has the three-sided sectional shape, whereas each of the projecting portions 46 of this embodiment has the trapezoidal sectional shape. When a circumferential length of a side of each of the projecting portions 46 on an outer circumferential side is set equal to that of each of the projecting portions 43, a sectional area of each of the projecting portions 46 becomes larger than that of each of the projecting portions 43. Thus, a physical strength of the rear-side ribs 42A is correspondingly larger than that of the rear-side ribs 42 of the first embodiment.

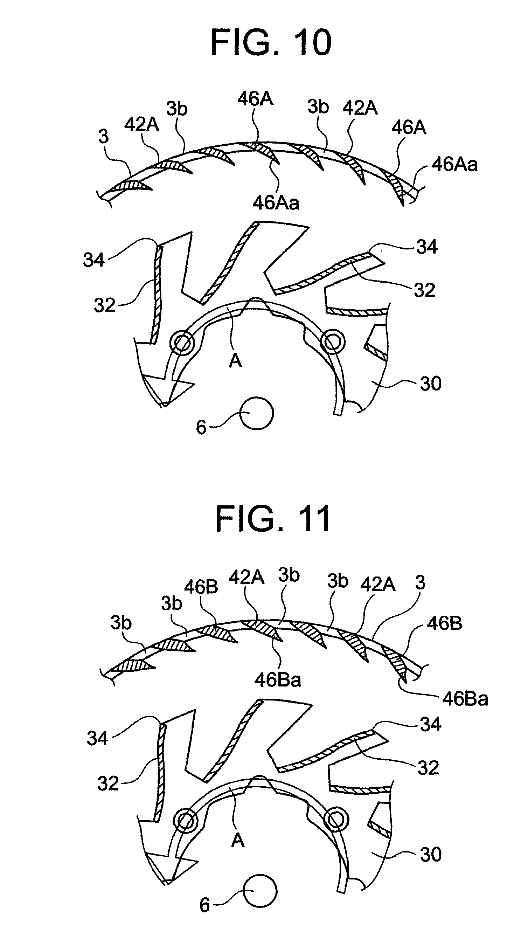

Each of the projecting portions 46 of the rear-side ribs 42A has a linear side surface that faces the rear-side exhaust holes 3b. Even in a case where both side surfaces of each of projecting portions 46A and 46B have an arc-like shape and each of apices 46Aa and 46Ba is oriented in the direction opposite to the rotating direction of the cooling fan 30 as illustrated in FIGS. 10 and 11, however, the same effects as those obtained by the rear-side ribs 42 of the first embodiment can be obtained.

Further, a distal end of each of the apices of each of the projecting portions 46, 46A, and 46B is sharp, but the same effects can be obtained even when the distal end is rounded for manufacturing convenience.

Front-side ribs, though not illustrated, also have projecting portions.

Similarly to the projecting portions 46, each of the projecting portions has a trapezoidal sectional shape. A radially inner-side apex of apices of the projecting portion is oriented in the direction opposite to the rotating direction of the front-side cooling fan 29, thereby providing the same effects as those of the rear-side ribs 42A.

Naturally, when the front-side cooling fan 29 has a shape different from that of the rear-side cooling fan 30, the direction of orientation of the apices of the projecting portions is also different.

The direction of orientation is the direction along the radial flow direction of the cooling air generated by the front-side cooling fan 29. The pressure loss of the cooling air is reduced by the front-side exhaust holes 2b.

### Third Embodiment

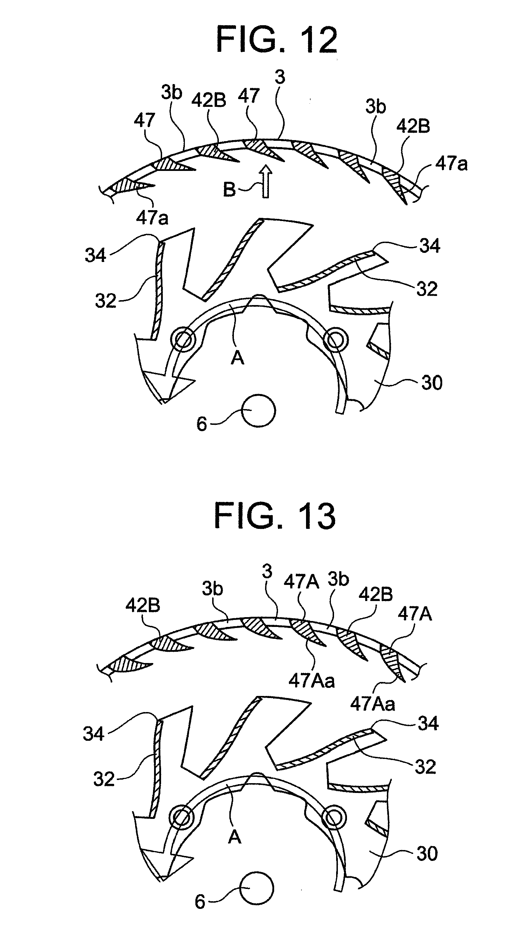

FIG. 12 is a sectional view when projecting portions 47 of rear-side ribs 42B of the alternator 1 for a vehicle according to a third embodiment of the present invention are cut along the vertical direction relative to the center axis line of the shaft 6.

Each of the projecting portions 43, 43A, and 43B of the rear-side ribs 42 of the first embodiment has a three-sided sectional shape, but each of the projecting portions 47 of the rear-side ribs 42B of this embodiment has a five-sided sectional shape.

In this embodiment, an inner-side apex 47a of apices of each of the projecting portions 47 is oriented toward the cooling fan 30 in the direction opposite to the rotating direction A of the cooling fan 30. The outer circumference of the rear bracket 3 is formed by a line that connects points of the other outermost-circumferential-side apices.

The remaining configuration is the same as that of the first embodiment.

According to the alternator 1 for a vehicle of this embodiment, the apex 47a of each of the projecting portions 47, which has the five-sided shape, is oriented in the direction opposite to the rotating direction A of the cooling fan 30. The both wall surfaces of each of the rear-side exhaust holes 3b are substantially parallel to the flow of the cooling air due to the projecting portions 47. Therefore, the same effects as those of the first embodiment can be obtained.

Further, each of the projecting portions 43 of the rear-side ribs 42 of the first embodiment has the three-sided sectional shape, whereas each of the projecting portions 47 of this embodiment has the five-sided sectional shape. When a circumferential length of a side of each of the projecting portions 47 on the outer circumferential side is set equal to that of each of the projecting portions 43, a sectional area of each of the projecting portions 47 becomes larger than that of each of the projecting portions 43. Thus, a physical strength of the rear-side ribs 42B is correspondingly larger than that of the rear-side ribs 42 of the first embodiment.

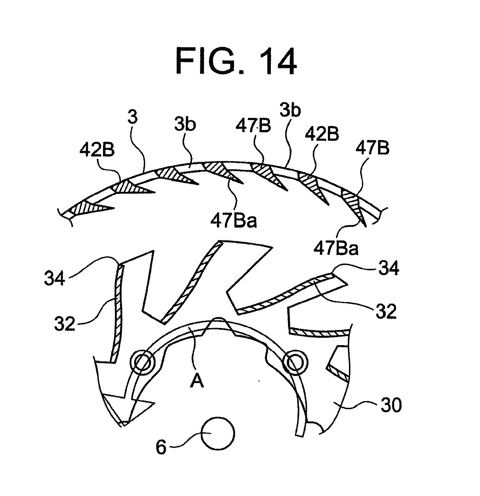

Each of the projecting portions 47 of the rear-side ribs 42B has a linear side surface that faces the rear-side exhaust holes 3b. Even in a case of projecting portions 47A and 47B each having an arc-like side surface that faces the rear-side exhaust holes 3b as illustrated in FIGS. 13 and 14, however, the same effects as those obtained by the ribs 42B can be obtained.

Further, a distal end of each of apices of each of the projecting portions 47, 47A, and 47B is sharp, but the same effects can be obtained even when the distal end is rounded for manufacturing convenience.

Front-side ribs, though not illustrated, also have projecting portions.

Similarly to the projecting portions 47, each of the projecting portions has a five-sided sectional shape. A radially inner-side apex of apices of the projecting portion is oriented in the direction opposite to the rotating direction of the front-side cooling fan 29, thereby providing the same effects as those of the rear-side ribs 42B.

Naturally, when the front-side cooling fan 29 has a shape different from that of the rear-side cooling fan 30, the direction of orientation of the apices of the projecting portions is also different.

The direction of orientation is the direction along the radial flow direction of the cooling air generated by the front-side cooling fan 29. The pressure loss of the cooling air is reduced by the front-side exhaust holes 2b.

The alternator 1 for a vehicle has been described as the rotating electrical machine in each of the embodiments described above, but the present invention is not limited to be used for a vehicle and is also applicable to an electric motor.

The sectional shape of each of the projecting portions may be a polygonal shape other than the three-sided shape, the trapezoidal shape, and the five-sided shape.

Further, when the ribs and the end portion are separated away from each other by a distance with which the short-circuit current is not generated, the projecting portions may be formed over a total length of the ribs.

Further, the present invention is also applicable to a rotating electrical machine including a cooling fan arranged only on one side surface of a rotor.

Further, the present invention is also applicable to a cooling fan without the fan plate 33.

### Reference Signs List

1 alternator for vehicle, 2 front bracket, 2a front-side intake hole, 2b rear-side exhaust hole, 3 rear bracket, 3a rear-side intake hole, 3b rear-side exhaust hole, 4 casing, 5 bearing, 6 shaft, 8 rotor, 9 field coil, 10 pole core, 11 stator, 12 stator core, 13 stator coil, 13a end portion, 14 slip ring, 15 brush, 17 cover, 18 intake hole, 20 rectifier, 21 positive-electrode-side diode, 22 negative-electrode-side diode, 23 first heat sink, 24 second heat sink base, 25 first heat-radiating fin, 26 second heat sink, 27 second heat sink base, 28 second heat-radiating fin, 29 front-side cooling fan, 30 rear-side cooling fan, 31 mounting base, 32 fan blade, 33 fan plate ,34 outer circumferential end, 41 front-side rib, 42, 42A, 42B rear-side rib, 43, 43A, 43B, 46, 46A, 46B, 47, 47A, 47B, rear-side projecting portion, 43a, 43Aa, 43Ba, 46a, 46Aa, 46Ba, 47a, 47Aa, 47Ba apex, 44 column portion, 45 front-side projecting portion, 45a front-side apex, A rotating direction, B radial direction

## Claims

1. A rotating electrical machine, comprising:
a casing including ribs each defining each of a plurality of exhaust holes formed on a circumferential side surface thereof;
a shaft arranged to extend along a center axis line of the casing;
a rotor fixed to the shaft;
a stator arranged in the casing to surround the rotor, comprising a stator core and stator coils wound around the stator core; and
a cooling fan fixed to at least one axial surface of the rotor, for cooling the stator using cooling air generated through rotation thereof,
the ribs each having a projecting portion having a polygonal sectional shape cut along a vertical direction relative to the center axis line at least in a portion away from respective end portions of the stator coils, the projecting portion having an apex oriented toward the cooling fan, which is oriented in a direction opposite to a rotating direction of the cooling fan.

2. A rotating electrical machine according to claim 1, wherein both wall surfaces of each of the exhaust holes, which are formed by side surfaces of the projecting portions, are opposed in parallel to each other.

3. A rotating electrical machine according to claim 1 or 2, wherein the ribs each have the projecting portion and a column portion, the column portion having an inner circumferential surface thereof located on a position that is in a radially outward direction relative to the apex in a portion closer to the respective end portions.

4. A rotating electrical machine according to claim 1, wherein the polygonal shape comprises a three-sided shape.

5. A rotating electrical machine according to claim 1, wherein the polygonal shape comprises a trapezoidal shape.

6. A rotating electrical machine according to claim 1, wherein the polygonal shape comprises a five-sided shape.

7. A rotating electrical machine according to any one of claims 1 to 6, wherein the rotating electrical machine comprises an alternator in which an AC voltage is output from the stator coils through the rotation of the rotor.
